Europäisches Patentamt

European Patent Office

Office européen des brevets

(11) Publication number: **0 152 388**
**A2**

## EUROPEAN PATENT APPLICATION

(21) Application number: **85850046.5**

(22) Date of filing: **08.02.85**

(51) Int. Cl.⁴: **G 01 F 1/20**
**G 01 F 1/30**

(30) Priority: **16.02.84 SE 8400830**

(43) Date of publication of application:
**21.08.85 Bulletin 85/34**

(84) Designated Contracting States:
**AT BE CH DE FR GB IT LI LU NL SE**

(71) Applicant: **EDAB Electronic Design AB**
**Box 69**
**S-760 40 Väddö(SE)**

(72) Inventor: **Viktorsson, Olle**
**Mellanvägen 8**
**S-760 40 Väddö(SE)**

(74) Representative: **Barnieske, Hans Wolfgang**
**c/o H.W. Barnieske Patentbyrä AB S:ta Ragnhildsgatan**
**24-26 P.O. Box 25**
**S-151 21 Södertälje 1(SE)**

(54) A method of and apparatus for measuring the flow rate of a flowable material.

(57) The rate of flow of a flowable material, such as a liquid, pellets or cereal grains is measured by causing the flowing material to fall on an inclined surface of a member 7 and sensing the inertial force exerted by the material on the member 7. The force exerted may be measured by sensing the deflection of the member 7 by means of electrical sensors attached to the member 7 or to a support 12 carrying the member 7. The sensors preferably comprise piezoresistive elements (13, 14) included in an electrical bridge circuit.

EP 0 152 388 A2

./...

Croydon Printing Company Ltd.

FIG.1

Title: "A method of and apparatus for measuring the flow rate of a flowable material"

THE PRESENT INVENTION relates to a method of and apparatus for measuring the flow rate of a flowable material.

The term "flowable material" as used herein includes liquids and granular or powdered solid material, being material which can, for example, be transported in pipelines by means of screws, pumps, etc. The "flowable material" may be, for example, cereal grains, pellets of plastics stock as supplied to manufacturers of plastics products and all types of pumpable liquids.

Material flow is almost always measured indirectly by estimating the quantity of material which has already passed, for example by weighing a container, using a load cell or measuring the level in a tank. However, this is an extremely imprecise method and no signal is obtained which can be used immediately for control or regulation in a process or which can be used to effect immediate regulation of such flow. In the manufacture of cable sheathing, to mention one example of an application in which there is a dire need for some means for obtaining an immediate measurement of a flow rate, because of the present lack of such a means, it is only once the cable sheathing has been manufactured that it is possible to ascertain its thickness which depends upon the flow rate of the sheathing material in a fluid state applied to the cable in the appropriate part of the sheathing process. This means that expensive cable must often be discarded or peeled and provided with a new sheath, for the simple reason that the flow of sheathing material in the process cannot be adequately controlled.

It is an object of the present invention to provide a method of measuring the flow of a flowable material, said method being simple and

providing an immediate output signal which can be used to provide a direct visual indication of flow rate or utilised for control purposes.

According to one aspect of the invention, a method of measuring the flow rate of a flowable material is charaterised in that the material is caused to meet a flow-measuring surface at an angle, said surface being preferably inclined in relation to the horizontal plane, and in that an inertial force proportional to the flow rate and acting on the surface is sensed by means of sensors emitting an output signal dependant on the flow rate.

Preferably a deflection or shearing stress caused by the inertial force acting on the surface is sensed. In preferred embodiments the inertial force is directly proportional to the quantity of flowing material and by utilising electrical sensors an output signal is obtained which can be converted by simple, conventional means to a readable signal or control signal.

According to a preferred embodiment of the invention piezoresistive elements are used to sense the deflection caused by the inertial force, thus enabling even very small variations to be registered.

It is another object of the invention to provide an apparatus for measuring the flow rate of a flowable material, which is capable of providing an immediate indication of flow rate and which is simple, inexpensive and reliable.

According to the invention, apparatus for performing the method is characterised by a flow-measuring surface arranged at an angle to the direction of flow of the flowing material, sensors being provided for sensing the inertial force which the flowing material exerts on the flow-measuring surface, said sensors being arranged to emit a signal which can then be converted to a standard signal proportional to the flow.

The deflection caused by the inertial force, or the shearing stress caused thereby in the element providing the flow-measuring surface, or a member supporting the element providing said flow-measuring surface, is preferably sensed by electrically resistive elements which, in embodiments of the invention, may be arranged on the upper or lower side, or on each side

**0152388**

of the element or its supporting member and may be arranged at an angle to each other, so that an output signal is obtained which is directly proportional to the force acting on the flow-measuring surface.

In a preferred embodiment of the invention the resistive elements consist of piezoresistive elements which have the great advantage of giving signals which can be registered even for extremely slight movements and extremely small fluctuations in the quantity of material coming into contact with the flow-measuring surface can therefore be detected.

The piezoresistive elements can be built into a ready-made unit or detector which may be attached by two screws, or in similar manner at two spaced-apart points, to the element providing the flow-measuring surface or to the supporting member carrying the element providing the flow-measuring surface. The ready-made unit or detector can also include components providing a directly usable output signal.

Embodiments of the invention are described below by way of example with reference to the accompanying drawings in which:-

FIGURE 1 is a view, partly in side elevation and partly in vertical section, which shows a flow-measuring apparatus embodying the invention, fitted in a feed facility;

FIGURE 2 is a partial view, in cross section along the line II – II in Figure 1; and

FIGURE 3 is a perspective view which shows an alternative embodiment of the flow measuring apparatus.

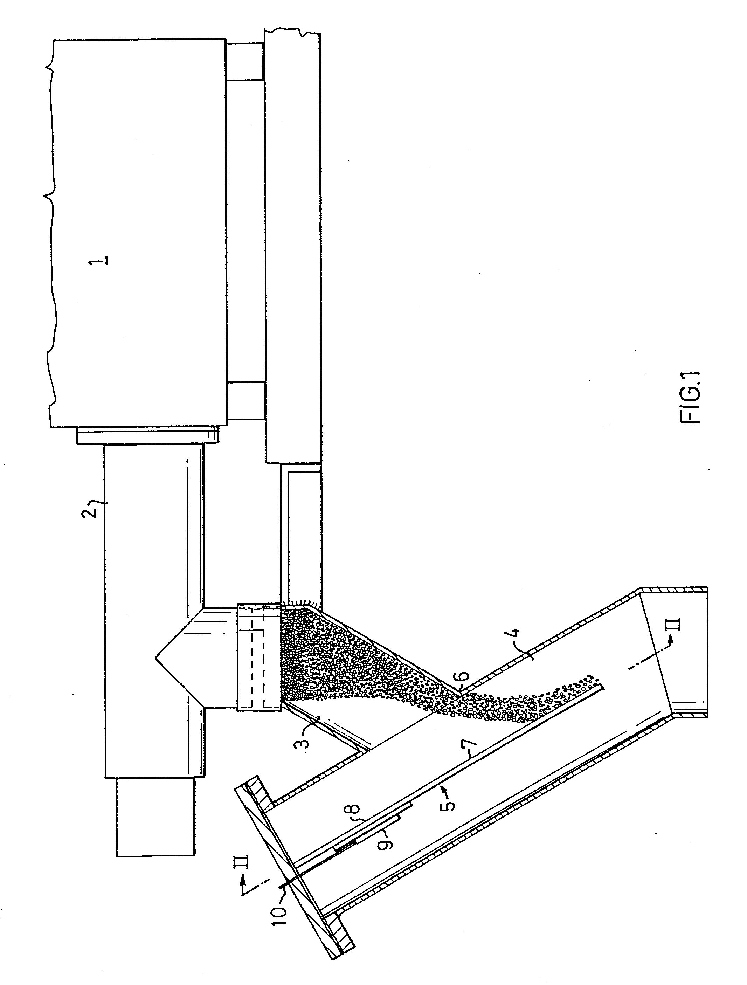

Figure 1 shows a feed facility for discharging flowable material, such as plastics pellets, from a store 1. The pellets are conveyed horizontally from store 1 by means of a feed-screw operating in a housing 2. The material is fed by the screw into a downcomer 3 and falls from there in a pipe 4 in which a flow transducer, generally designated 5, is fitted. The pipe 4 is inclined substantially relative to the horizontal, and the transducer 5 includes a flat plate 7 extending along the axis of the pipe 4, and thus similarly inclined to the horizontal, the upper surface of the plate 7, facing towards the outlet of downcomer 3, constituting the "flow-measuring surface" referred to herein.

In the embodiment shown in Figure 1 the downcomer 3 is designed so that all the discharged material must be deflected around the corner 6 formed at the lower junction of the downcomer 3 with the upper wall of the pipe 4 and will therefore, irrespective of the quantity, fall substantially vertically from the corner, meeting the flow-measuring surface within a certain predetermined area. As will be explained below, this is of significance for the accuracy of measurement.

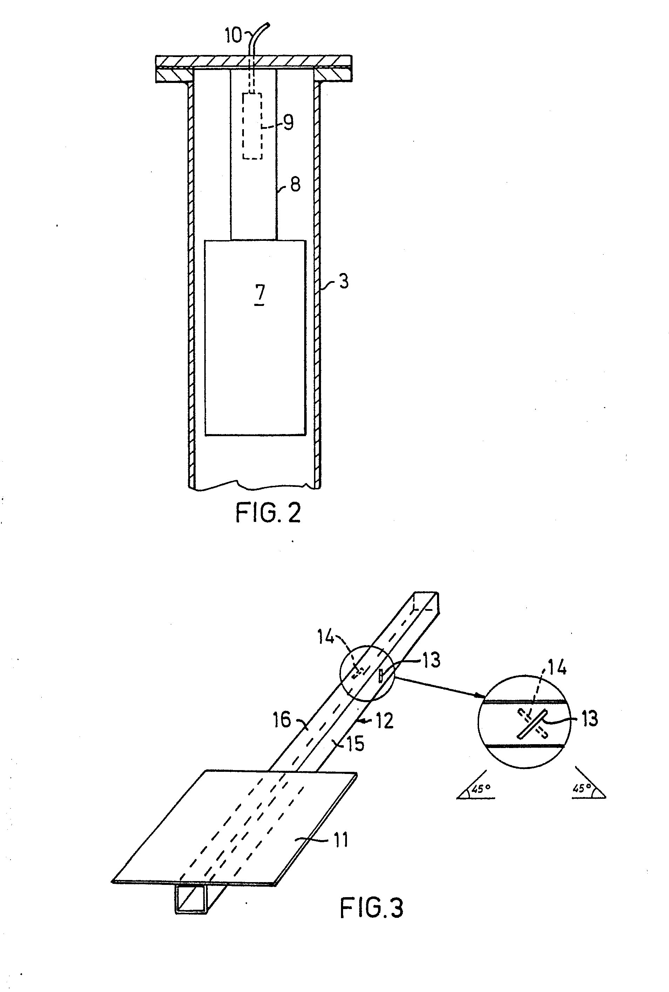

The flow transducer 5 itself, as shown in more detail in Figure 2, consists of a relatively narrow beam 8 supporting the plate 7 at its lower end and fixed at its upper end to a cap fixed to the upper end of the pipe 4. A detector module 9 is secured to the lower side of the beam 8, i.e. to the side which faces away from the outlet from the downcomer 3. The detector module 9 is in the form of a separately formed unit incorporating piezoresistive elements, said detector module 9 being connected to a central unit, not described in detail, via a cable 10. Signal input and conversion are achieved in conventional manner and do not affect the concept of the invention.

The module 9 is preferably secured to the beam 8, at two spaced-apart points therealong, by two screws (not shown) or other fasteners.

Figure 3 shows schematically an alternative embodiment in which a plate 11, providing, by its upper surface, a flow-measuring surface, is mounted on a supporting beam 12 at one end of the beam. The beam 12 is in the form of a tube of square cross-section having an upper face, to which plate 11 is secured, a lower face and opposite vertical side faces 15, 16. Sensors 13, 14, which may consist of piezoresistive elements, are arranged on the side faces 15, 16 of the beam 12. The elements 13, 14 are elongate and are adapted to sense stresses in directions along their length. The two elements 13, 14 are arranged with their axes extending in mutually perpendicular directions and at $45^{o}$ to the upper and lower faces of the beam 12. The two elements 13 and 14 are connected in respective arms of on electrical bridge circuit, the bridge producing a signal, due to the shearing stresses occurring in the beam, caused by the inertial force exerted by the flowing material on the flow-measuring surface.

In the embodiment according to Figure 3 the material may land substantially anywhere on the measuring surface, without the output signal being affected.

Instead of utilising the shearing force as shown in Figure 3, the difference between the extension and compression occurring respectively on the upper or lower faces of the beam 12 may be measured by arranging appropriate electrical sensors on said upper or lower faces, connecting these sensors in an electrical bridge circuit and using the output signal from the bridge, which is a measurement of said difference, as an indication of the flow rate.

The sensitivity of the sensor elements used and the expected inertial forces are decisive for dimensioning the contructional elements in the device. This is therefore something which can be empirically determined by one skilled in the art who has knowledge of the invention.

The following example further illustrates the invention.

Example

A plate measuring 66 x 244cm was placed at an angle of $45^{\circ}$ to the horizontal plane. This angle was varied within certain limits, as indicated in the table.

A transducer containing piezoresistive elements was fitted to the lower side of the plate at its upper end. The upper surface of the plate, coming into contact with the material of which the flow rate was to be sensed was covered with "TEFLON" (P.T.F.E.) to give the least possible friction between plate and flowing material since this might cause measuring errors.

The material was allowed to fall vertically down onto the inclined plate from various heights and the distance between the contact surface and the edge of the plate located furthest from the transducer was also varied. The table indicates the effect of the varying parameters on the output signal, expressed as a percentage.

## TABLE

| Angle of inclination | | Vertical drop | | Contact distance (from edge) | |
|---|---|---|---|---|---|
| (°) | (%) | (mm) | (%) | (mm) | (%) |
| 45 | 100 | 350 | 100 | 230 | 100 |
| 55 | 90 | 180 | 75 | 210 | 85.7 |
| 35 | 110 | 15 | 30 | 190 | 75.8 |
| | | | | 170 | 65.1 |
| | | | | 150 | 52.3 |
| | | | | 130 | 41.8 |
| | | | | 110 | 31.2 |
| | | | | 90 | 16.5 |
| | | | | 70 | 9.3 |

It is clear from the table that the material should come into contact with the measuring surface within a relatively limited area in order to avoid erroneous measuring results.

A flow measuring apparatus embodying the invention may be used for flow rates within a range of 50 - 1000 kg/h.

-7-

**0152388**

<u>CLAIMS</u>

1. A method of measuring the rate of flow of a flowable material characterised in that a flow measuring device (5) is utilised having a part (7,11) providing a surface and sensing means (9, 13, 14) providing an output signal dependant on the magnitude of a force exerted on said surface, and in that said flowable material is caused to strike said surface at an angle and thereafter to pass from said surface, and rate of flow or the flowable material is derived from the output signal from said sensing means (9, 13, 14), dependant on the force exerted by the material on said surface.

2. A method according to claim 1 characterised in that said part (7, 11) providing said surface is mounted for resilient displacement under the action of the inertial force exerted by said material, and wherein said sensing means (9, 13, 14) senses such displacement of said part away from an equilibrium position and such displacement is used as a measure of said force.

3. A method according to claim 1 or claim 2, characterised in that said sensing means comprises a plurality of electrical sensors (13, 14).

4. A method according to claim 3, characterised in that said electrical sensors (13, 14) are arranged to form part of an electrical bridge circuit and said measurement of said rate of flow is derived from the signal provided across said bridge.

5. A method acording to claim 4, characterised in that the electrical sensors (13, 14) included in said bridge circuit are piezoresistive sensors.

6. Apparatus for measuring the rate of flow of a flowable material, characterised by a part (7, 11) providing a surface, against which such material, whilst flowing can impinge sensing means for providing an output signal dependant on the magnitude of a force exerted on said surface by such material and means for deriving, from said output signal, a measurement of the rate of flow of said material.

7.     Apparatus according to claim 6 characterised in that said sensing means comprises sensors (9, 13, 14) arranged to sense the flexural stress in said part (7) providing said surface or in a supporting member 12 supporting said part (11).

8.     Apparatus according to claim 6 characterised in that said sensing means comprises sensors (13, 14) arranged to sense the shearing stress in said supporting member (7, 11) or a supporting member (12) supporting the same.

9.     Apparatus according to any of claims 6 to 8 characterised in that said sensing means comprises two electrically resistive elements (13, 14) forming part of an electrical bridge circuit.

10.    Apparatus according to claim 6 characterised in that said part (11) providing said surface is supported by a member (12) having a side facing in the same direction as said surface and a side facing in the opposite direction and in that said sensing means includes a respective electrically resistive element secured to each of said sides of said support member, and in that said electrically resistive elements are connected in an electrical bridge circuit.

11.    Apparatus according to claim 6 characterised in that said part (11) providing said surface is supported by a member (12) having opposite sides, in that said sensing means comprises two elongate electrically resistive sensors (13, 14) each sensitive to mechanical stresses applied thereto parallel with a predetermined axis thereof and in that said electrically resistive sensors are secured to said opposite sides of the supporting member (12) with said axes thereof extending in mutually perpendicular directions, and said electrically resistive sensors being connected in an electical bridge circuit.

12.    Apparatus according to claim 10 or claim 11 characterised in that said electrically resistive elements are piezo resistive elements.

13.    Apparatus according to claim 6 characterised in that said sensing means comprises a detector module formed separately from the remainder of the apparatus, said detector module including piezo resistive sensing elements, and means securing said module to said part (7) providing said surface at two spaced-apart attachment points on the module and said part.

FIG.1

FIG. 2

FIG.3